# EUROPEAN PATENT SPECIFICATION

(11) **EP 4 414 243 B1**
(45) Date of publication and mention of the grant of the patent: **14.01.2026**
(21) Application number: 22906246.8
(22) Date of filing: 29.11.2022
(51) Int. Cl.: B61L 27/20, B61L 27/04

(54) **ANTI-DEADLOCK METHOD AND APPARATUS FOR TACS, AND DEVICE AND MEDIUM**
ANTI-DEADLOCK-VERFAHREN UND -VORRICHTUNG FÜR TACS SOWIE VORRICHTUNG UND MEDIUM
PROCÉDÉ ET APPAREIL ANTI-BLOCAGE POUR TACS, ET DISPOSITIF ET SUPPORT

(30) Priority: 13.12.2021 CN 202111520230
(43) Date of publication of application: 14.08.2024
(73) Proprietor: Casco Signal Ltd., Shanghai 200435 (CN)
(72) Inventor: GAO, Hao, Shanghai 200435 (CN); WANG, Xiaoyong, Shanghai 200435 (CN); LING, Xiaoque, Shanghai 200435 (CN); XU, Haigui, Shanghai 200435 (CN); FENG, Wei, Shanghai 200435 (CN); PAN, Liang, Shanghai 200435 (CN); LU, Yiran, Shanghai 200435 (CN); LI, Jing, Shanghai 200435 (CN)
(74) Representative: Sun, Yiming
(86) International application number: PCT/CN2022/134837
(87) International publication number: WO 2023/109495

(56) References cited:
- EP-A1- 2 402 229
- EP-A1- 3 381 768
- EP-A1- 4 159 578
- CN-A- 109 878 556
- CN-A- 111 776 013
- CN-A- 113 044 082
- CN-A- 113 044 082
- CN-A- 113 264 086
- CN-A- 113 264 086
- CN-A- 113 335 346
- CN-A- 114 312 932
- US-A1- 2006 212 189
- US-A1- 2019 359 238

## Description

### FIELD OF TECHNOLOGY

The present invention relates to a train signal control system, in particular to an anti-deadlock method, apparatus, a device and medium for a TACS system.

### BACKGROUND

At present, a signal system of urban rail transit adopts a Communication Based Train Control (CBTC) system as a mainstream train operation control system. In the CBTC system, combining with a train scheduling plan and a train running position, a dispatching management subsystem choose a timing to sends a route establishment command to a wayside interlock. According to the command, the interlock packages wayside resources, required for a train to run in a next section, in a form of route locking, so that the train can operate safely in a route. However, this resource management method, which packages all the resources of a whole section of a path and distributes them to the train at one time, is not capable of maximizing the utilization efficiency of the wayside resources, but restricts the capacity of the train to pass through a line, especially a switch zone. Under a premise of ensuring safe running, how to fully exploit the utilization efficiency of a line and train resources in a rail transit system and further improve the capacity of passing through of the line has become a problem to be solved by a new generation of urban rail transit signal system.

In this context, a Train Autonomous Circumambulate System (TACS) based on train-train communication emerges. Compared with the centralized wayside resource management manner which relies on the interlock to handle the route in the traditional signal system, the TACS system adopts a distributed resource management manner of multi-train parallel autonomous computing. In the TACS system, a carborne controller (CC) autonomously plans a demand for wayside resources based on a train operation task sent by an automatic train supervision (ATS). In a process of controlling automatic operation of a train, combining with a train operation state and a planned operation curve, the CC chooses a timing to apply for resources from a wayside resource controller (WRC), and uses or releases the resources after allocation. In order to achieve more refined wayside resource management, in a resource management method for a TACS system (CN 113 044 082 A), resources of a switch are divided into normal switch position or reverse movable zone resources and normal switch position or reverse side conflict zone resources for separate management. When a train is cleared from the switch movable zone and releases the corresponding resources, other trains can apply for the resources of the switch movable zone and control the switch to rotate, which effectively improves the capacity of the train to pass through the switch zone. Further, a mutual exclusion principle of resource allocation described in the method can ensure that the switch related normal position or reverse resources would not be allocated at the same time, which can effectively ensure running safety. CN 113 264 086 A discloses a train interval protection control method and device based on a TACS system. The method comprises the steps describing that a vehicle-mounted controller CC receives a train operation command issued by a train automatic monitoring system ATS, and obtains a motion task. The vehicle-mounted controller CC calculates a guarantee area of the train in real time according to train positioning, vehicle characteristics and characteristic information of the vehicle-mounted controller. The vehicle-mounted controller CC calculates track resources needing to be used according to the guaranteed area of the train in combination with the current task information, and requests information of conflicting trains occupying the track resources from a trackside resource manager WSIC. The trackside resource manager WSIC sends a conflict train list and the like on the track resources required to be used by the track resource manager WSIC to the vehicle-mounted controller CC according to the information of the track resources required to be occupied by the whole-line trains.

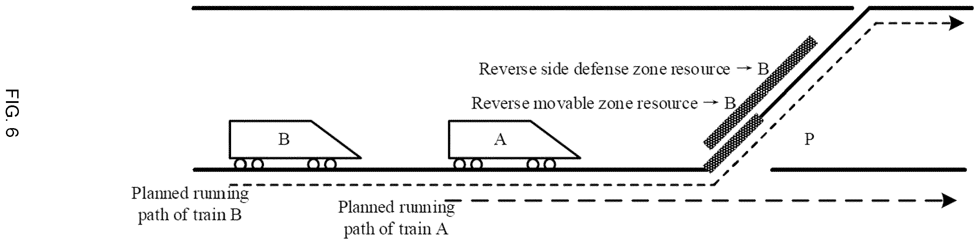

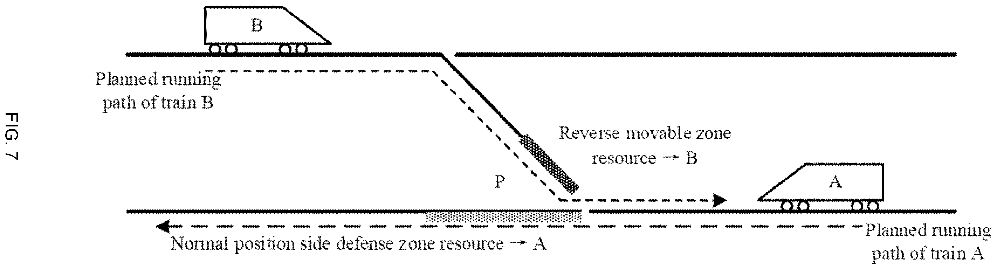

However, limited by non-uniqueness of a control source, the resource management manner of multi-train distributed control would inevitably have a problem of resource competition. When the WRC improperly allocates resources to trains, the trains would block each other and fail to complete a planned operation task, resulting in multi-train operation deadlock and affecting the running efficiency. As shown in FIG. 6, two trains running in the same direction on the same track need shunt for operation at a front switch. If the back train obtains relevant reverse resources of the front switch before the front train, it would result in a deadlock scenario in which the front train is not capable of obtaining normal switch position resources and passing through the switch, and the back train has the switch resources but is not capable of going beyond the front train for operation. Also as shown in FIG. 7, operation paths of two trains running in opposite directions intersect at a switch. If one train obtains normal position side defense zone resources of the switch and another train obtains reverse movable zone resources of the switch, according to the principle of mutual exclusion of resource allocation, neither train can further obtain other normal position or reverse resources needed to pass through the switch, resulting in operation deadlock of the trains at the switch.

### SUMMARY

The purpose of the present invention is to provide an anti-deadlock method, apparatus, a device and medium for a TACS system in order to overcome the defects existing in the prior art.

The present invention is defined by the independent claims. Advantageous embodiments are described in the dependent claims, the following description and the drawings. Inter alia, the purpose of the present invention can be realized by the following technical solutions:
According to a first aspect of the present invention, provided is an anti-deadlock method for a TACS system, comprising the following steps:
step S1: generating, by an automatic train supervision (ATS), a train operation task according to a train scheduling plan, and issuing the train operation task to a carborne controller (CC);
step S2: generating, by the CC, a planned operation curve and a planned running path according to the train operation task issued by the ATS, and sending the planned running path to a wayside resource controller (WRC) for confirmation;
step S3: comparing, by the WRC, the planned running path of the train with confirmed running paths of other trains, generating a confirmed running path of the train after arbitration, and updating the confirmed running paths of the other trains;
step S4: calculating, by the CC, a resource application range of the train in an operation process according to a current operation state of the train, the planned operation curve and line conditions;
step S5: sending, by the CC, an application request for related resources within the resource application range to the WRC, and at the same time, sending a release request for related resources outside the resource application range to the WRC; and
step S6: calculating and responding to, by the WRC, the resource application request and the resource release request sent by each CC according to the confirmed running path of each train, and controlling a state of a wayside device to be consistent with a state of the resource application.

As a preferred technical solution, the TACS system comprises the ATS, the CC and the WRC, wherein the ATS is responsible for monitoring the operation state of the train and the state of the wayside device, and is responsible for generating the train operation task; the CC is responsible for planning the running path of the train, controlling automatic operation of the train, calculating resources required during the operation of the train and completing the application and release of the resources; and the WRC is responsible for confirming the planned running path of the train, allocating and recovering wayside resources, controlling the wayside device and collecting the state of the wayside device.

As a preferred technical solution, the wayside resources comprise normal switch position and reverse movable zone resources as well as normal switch position and reverse side defense zone resources; and the normal switch position and reverse movable zone resources and the normal switch position and reverse side defense zone resources are allocated according to a principle of mutual exclusion, and the principle of mutual exclusion means that resources of different positions of a switch are not capable of being allocated at the same time.

As a preferred technical solution, the train operation task comprises information of an originating platform, a destination platform, departure time and arrival time, which is used to reflect operation requirements of the train in an inter-station interval; and after the train stops correctly at a platform, the ATS generates and issues the train operation task for the train to arrive at a next platform according to an operation plan.

As a preferred technical solution, the planned operation curve is a reference speed curve calculated by the CC according to the train operation task, the line conditions, train traction and braking characteristics, a speed limit condition and a driving mode.

As a preferred technical solution, the planned running path is a running path calculated by the CC according to the train operation task, and contains the normal switch position or reverse movable zone resources and the normal switch position or reverse side defense zone resources required by the train to complete the task.

As a preferred technical solution, the planned running path when the train performs a turn-back operation is required to consider the train operation task for two consecutive stations.

As a preferred technical solution, the confirmed running path means the planned running path of the train wholly or partly confirmed by the WRC after conflicts between the planned running path of the train and the confirmed running paths of the other trains are arbitrated according to preset steps and principles to avoid operation deadlock of the trains caused by unreasonable resource allocation, such that the WRC ensures that all wayside resources on the confirmed running path of the train allocated to the train are reasonable.

According to present invention, the step S3 of comparing, by the WRC, the planned running path of the train with confirmed running paths of other trains, generating a confirmed running path of the train after arbitration, and updating the confirmed running paths of the other trains is specifically as follows:
step S31: judging whether the planned running path of the train intersects with the confirmed running path of any other train, and if not, calculating, by the WRC, the confirmed running path of the train as being equal to the planned running path of the train, and if so, performing step S32;
step S32: for each wayside resource in an intersection zone between the planned running path of the train and the confirmed running path of the other train, judging, by the WRC, reasonability of allocating the wayside resource to each train;
step S33: calculating, by the WRC, a starting end of the confirmed running path of the train as being a starting end of the planned running path of the train, and a terminal end of the confirmed running path of the train as being a first conflict point on the planned running path of the train, that is, a first position where a resource allocated to the train is not reasonable; and
step S34: if there is a conflict point in the confirmed running path of the other train in an arbitration process, updating, by the WRC, the confirmed running path of the other train and shortening the terminal end of the confirmed running path of the other train to be the conflict point.

In the step S32, principles of judging the reasonability of allocating the wayside resource in the intersection zone between the planned running path of the train and the confirmed running path of the other train are as follows:
principle P1: if the planned running path of the train intersects with the confirmed running path of the other train and the trains in the intersection zone operate in opposite directions, it is unreasonable for the WRC to allocate the resource in the intersection zone to the train, but it is reasonable to allocate the resource to the other train; and
principle P2: if the planned running path of the train intersects with the confirmed running path of the other train and the trains in the intersection zone operate in the same direction, a condition for judging the reasonability of allocating, by the WRC, the resource in the intersection zone to the train and the other train follows preset sub-principles.

The preset sub-principles specifically comprise:
principle P21: if the train and the other train pass through the resource in a unique order, it is reasonable to allocate the resource to the train that passes through the resource at the earliest;
principle P22: otherwise, if the resource is a switch related resource and other related resources of the switch have been allocated, it is reasonable to allocate the resource to the train that has obtained the switch related resources;
principle P23: otherwise, if the resource has already been applied by a train, it is reasonable to allocate the resource to the train that requests the resource at the earliest; and
principle P24: otherwise, the reasonability of the resource allocation is determined according to a default order.

According to a second aspect of the present invention, provided is an anti-deadlock apparatus for a TACS system, inter alia comprising:
a train operation task generation module configured to generate, by an ATS, a train operation task according to a train scheduling plan, and issue the train operation task to a CC;
a planned operation curve and plan running path generation module configured to generate, by the CC, a planned operation curve and a planned running path according to the train operation task issued by the ATS, and send the planned running path to a WRC for confirmation;
a confirmed running path generation module configured to compare, by the WRC, the planned running path of the train with confirmed running paths of other trains, generate a confirmed running path of the train after arbitration, and update the confirmed running paths of the other trains;
a resource application range calculation module configured to calculate, by the CC, a resource application range of the train in an operation process according to a current operation state of the train, the planned operation curve and line conditions;
a resource application and release module configured to send, by the CC, an application request for related resources within the resource application range to the WRC, and at the same time, send, by the CC, a release request for related resources outside the resource application range to the WRC; and
a wayside resource allocation module configured to calculate and respond to, by the WRC, the resource application request and the resource release request sent by each CC according to the confirmed running path of each train, and control a state of a wayside device to be consistent with a state of the resource application.

According to a third aspect of the present invention, provided is an electronic device, comprising a processor and a memory having stored thereon a computer program, which, when executing by the processor, implements the above-mentioned methods.

According to a fourth aspect of the present invention, provided is a computer readable storage medium having stored thereon a computer program, which, when executed by a processor, implements the above-mentioned methods.

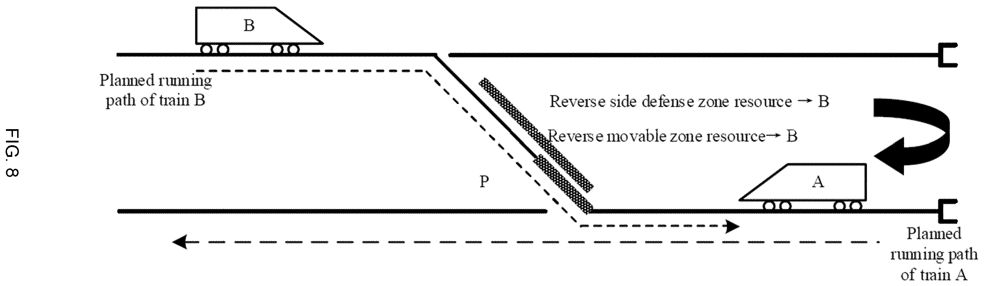

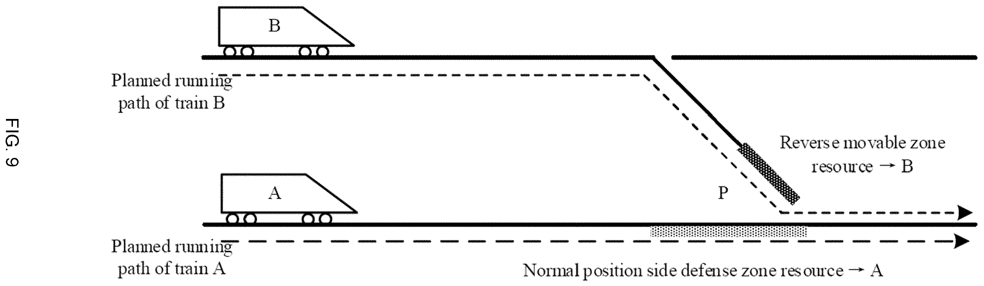

Compared with the prior art, the present invention has the following advantages:
(1) The train path planning and confirmation mechanism proposed by the present invention can effectively avoid the train operation deadlock problem that may be caused by the resource management manner of multi-train distributed autonomous control in the TACS system, while improving the requisition efficiency of the wayside resources and train resources.
(2) The present invention allows a plurality of trains to apply for or release resources in parallel as control sources, and the WRC allocates resources based on the reasonability of the resource allocation, without the need for additional negotiation among a plurality of CCs on the ownership of resources.
(3) In the present invention, for two trains with conflicting running paths and running in opposite directions, the reasonability determination of resource allocation in the conflict zone follows the principle of "first confirmed, first served", which can effectively prevent the train operation deadlock scenario in which the front train does not depart while the back train has entered during the return-back process of a plurality of trains, as shown in FIG. 8.
(4) In the present invention, for two trains with overlapping running paths and running in the same direction, the reasonability determination of resource allocation in the overlapping zone follows the first priority principle of "first coming, first served", which can effectively prevent the train operation deadlock caused by the back train preempting the switch resource required by the front train during the shunt operation of the two trains, as shown in FIG. 6.
(5) In the present invention, for two trains with overlapping running paths and running in the same direction, under the premise that the first priority principle is not satisfied, the reasonability determination of resource allocation should follow the second priority principle of "first owning, first served", which can effectively prevent the train operation deadlock caused by two trains obtaining different types of resources at different positions at the same time by application during the convergence operation of the two trains, as shown in FIG. 9.
(6) In the present invention, the CC calculates the resource application range required by the train in an operation process according to the current running state, planned running curve and line conditions, and sends the resource application or release requests to the WRC based on the resource application range, which can effectively avoid the low resource utilization caused by the train applying for too many resources in advance in an operation process, which causes other trains to fail to apply.

### BRIEF DESCRIPTION OF THE DRAWINGS

FIG. 1 is a diagram of a TACS system architecture;
FIG. 2 is a flow chart of an anti-deadlock method of the present invention;

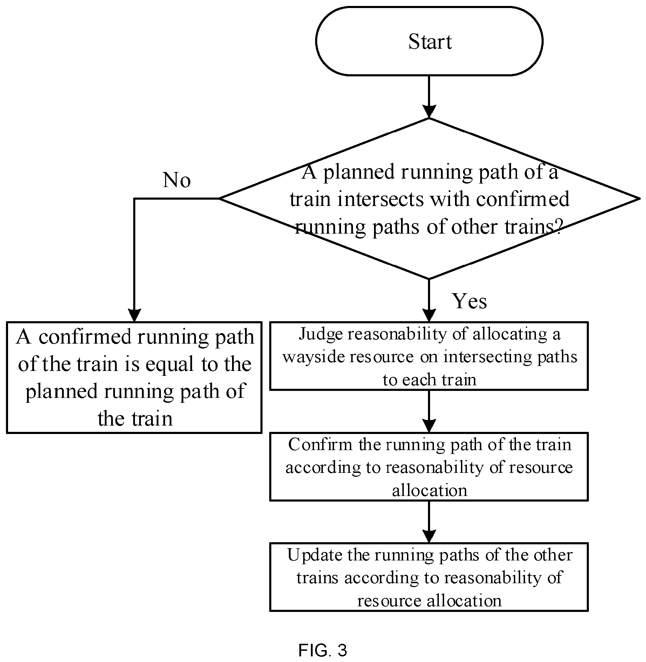

FIG. 3 is a flow chart of arbitration steps of a train to confirm a running path;

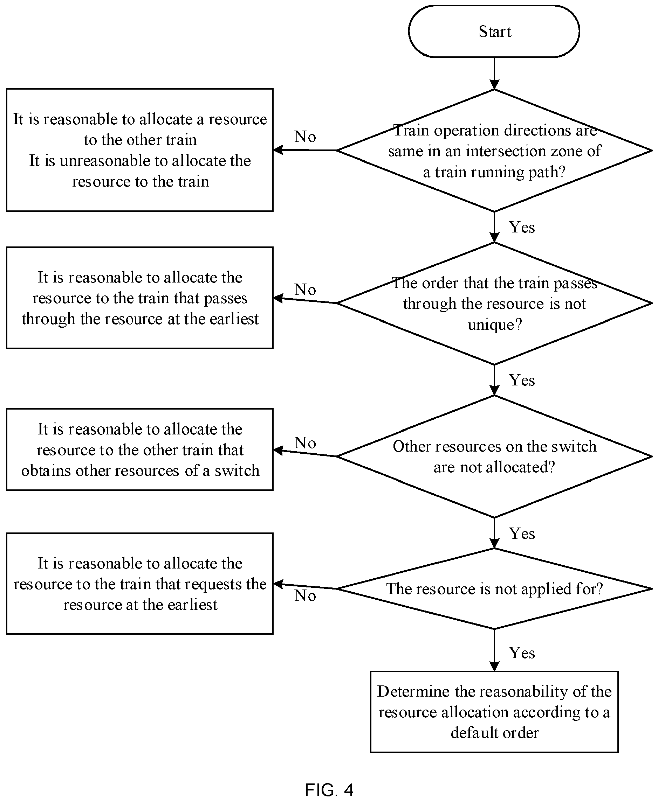

FIG. 4 is a flow chart of reasonability determination of resource allocation in a conflict zone;
FIG. 5 is a schematic diagram of a switch movable zone resource and a switch side defense zone resource;
FIG. 6 is a deadlock scenario of shunt operation of a train in the same direction;
FIG. 7 is a schematic diagram of a deadlock scenario of operations of trains in opposite directions;
FIG. 8 is a schematic diagram of a deadlock scenario of train turn-back operation;
FIG. 9 is a schematic diagram of a deadlock scenario of convergence operation of a train in the same direction;
FIG. 10 is a schematic diagram of an anti-deadlock process of shunt operation of a train in the same direction; and
FIG. 11 is a schematic diagram of an anti-deadlock apparatus of the present invention.

### DESCRIPTION OF THE EMBODIMENTS

The following is a clear and complete description of the technical solutions in the embodiments of the present invention in combination with accompanying drawings attached to the embodiments of the present invention. Obviously, the embodiments described are a part of the embodiments of the present invention, but not the whole embodiments.

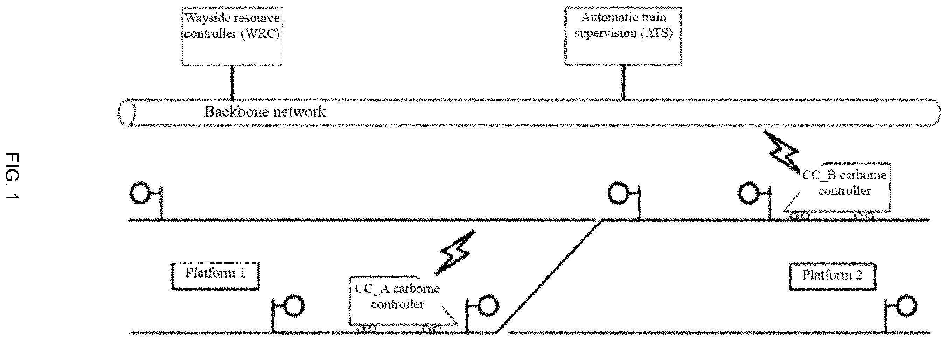

As shown in FIG. 1, a TACS system mainly comprises an automatic train supervision (ATS), a wayside resource controller (WRC) and a carborne controller (CC) of a train. The ATS is responsible for supervising and controlling operation of the train, and has functions of tracking train operation, issuing a train operation task, alarm and event reporting, and train operation adjustment, etc. The WRC has functions of managing a train sequence, confirming a train planning running path, allocating and recovering a wayside resource, controlling a signal and switch, and collecting a state of a wayside device and driving the wayside device, etc. The CC autonomously calculates and plans the running path and a planned operation curve according to the train operation task, applies for and releases resources to the WRC, actively controls the train, realizes functions of train safety protection and train automatic driving.

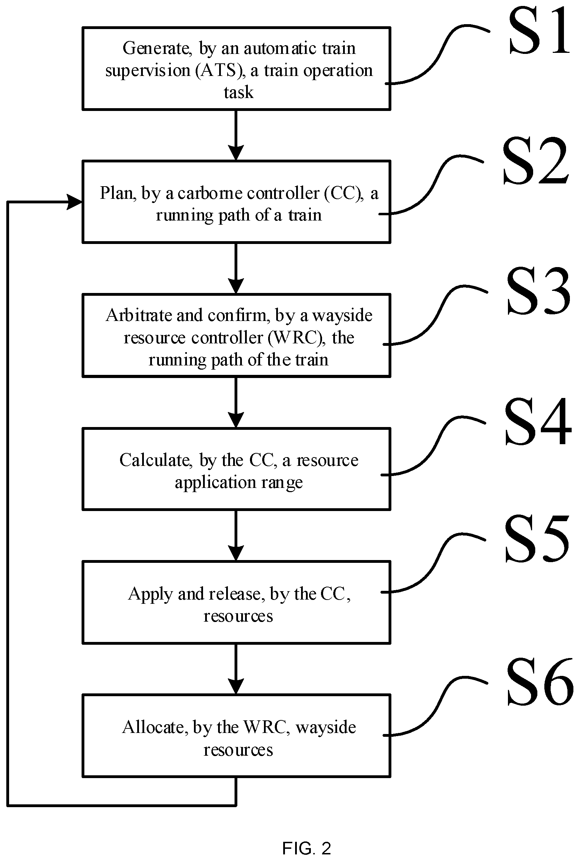

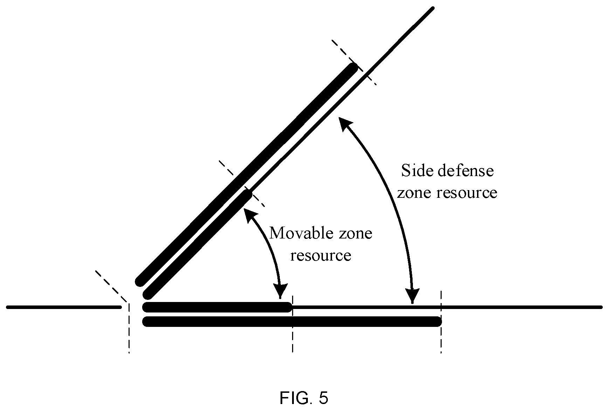

As shown in FIG. 2, provided in the present invention is an anti-deadlock method for a TACS system, comprising:
step S1: generating, by an automatic train supervision (ATS), a train operation task according to a train scheduling plan, and issuing the train operation task to a carborne controller (CC);
step S2: generating, by the CC, a planned operation curve and a planned running path according to the train operation task issued by the ATS, and sending the planned running path to a wayside resource controller (WRC) for confirmation;
step S3: comparing, by the WRC, the planned running path of the train with confirmed running paths of other trains, generating a confirmed running path of the train after arbitration, and updating the confirmed running paths of the other trains;
step S4: calculating, by the CC, a resource application range of the train in an operation process according to a current operation state of the train, the planned operation curve and line conditions;
step S5: sending, by the CC, an application request for related resources within the resource application range to the WRC, and sending a release request for related resources outside the resource application range to the WRC; and
step S6: calculating and responding to, by the WRC, the resource application request and the resource release request sent by each CC according to the confirmed running path of each train, and controlling a state of a wayside device to be consistent with a state of the resource application;
the TACS system comprises the ATS, the CC and the WRC, as shown in FIG. 1, wherein the ATS is responsible for monitoring the operation state of the train and the state of the wayside device, and is responsible for generating the train operation task; the CC is responsible for planning the running path of the train, controlling automatic operation of the train, calculating resources required during the operation of the train and completing the application and release of the resources; and the WRC is responsible for confirming the planned running path of the train, allocating and recovering wayside resources, controlling the wayside device and collecting the state of the wayside device;
the wayside resources comprise a normal switch position or reverse movable zone resource and a normal switch position or reverse side defense zone resource, as shown in FIG. 5; and the normal switch position or reverse movable zone resource and the normal switch position or reverse side defense zone resources is allocated according to a principle of mutual exclusion, and the principle of mutual exclusion means that resources of different positions of a switch are not capable of being allocated at the same time. For example, after the positioning movable area resources are allocated to the train, no train can obtain the reverse positioning movable area resources of the switch;
the train operation task comprises elements of an originating platform, a destination platform, departure time and arrival time, which reflect operation requirements of the train in an inter-station interval; and after the train stops correctly at a platform, the ATS generates and issues the train operation task for the train to arrive at a next platform according to an operation plan;
the planned operation curve is a reference speed curve calculated by the CC according to the train operation task, the line conditions, train traction and braking characteristics, a speed limit condition and a driving mode; and
the planned running path means a running path calculated by the CC according to the train operation task, and contains the normal switch position or reverse movable zone resource and the normal switch position or reverse side defense zone resource required by the train to complete the task, and after obtaining the operation task, the CC would periodically send the planned running path to the WRC for confirmation until the operation task is completed. The planned running path when the train performs a returning-back operation is required to consider the train operation task for two consecutive stations.

The confirmed running path means the planned running path of the train wholly or partly confirmed by the WRC after conflicts between the planned running path of the train and the confirmed running paths of the other trains are arbitrated according to preset steps and principles to avoid operation deadlock of the trains caused by unreasonable resource allocation, such that the WRC ensures that all wayside resources on the confirmed running path of the train allocated to the train are reasonable. After receiving the planned running path of the train, the WRC generates a confirmed running path of the train and updates the confirmed running paths of other trains.

In the step S3, the arbitration method of the WRC to the planned running path of the train and the confirmed running paths of other trains specifically comprises the following steps:
step S31: judging whether the planned running path of the train intersects with the confirmed running path of any other train, and if not, calculating, by the WRC, the confirmed running path of the train as being equal to the planned running path of the train, and if so, performing step S32;
step S32: for each wayside resource in an intersection zone between the planned running path of the train and the confirmed running path of the other train, judging, by the WRC, reasonability of allocating the wayside resource to each train;
step S33: calculating, by the WRC, a starting end of the confirmed running path of the train as being a starting end of the planned running path of the train, and a terminal end of the confirmed running path of the train as being a first conflict point on the planned running path of the train, that is, a first position where a resource allocated to the train is not reasonable; and
step S34: if there is a conflict point in the confirmed running path of the other train in an arbitration process, updating, by the WRC, the confirmed running path of the other train and shortening the terminal end of the confirmed running path of the other train to be the conflict point.

In the step S32, principles of judging the reasonability of allocating the wayside resource in the intersection zone between the planned running path of the train and the confirmed running path of the other train are as follows:
principle P1: if the planned running path of the train intersects with the confirmed running path of the other train and the trains in the intersection zone operate in opposite directions, it is unreasonable for the WRC to allocate the resource in the intersection zone to the train, but it is reasonable to allocate the resource to the other train; and
principle P2: if the planned running path of the train intersects with the confirmed running path of the other train and the trains in the intersection zone operate in the same direction, a condition for judging the reasonability of allocating, by the WRC, the resource in the intersection zone to the train and the other train follows sub-principles:
   principle P21: if the train and the other train pass through the resource in a unique order, it is reasonable to allocate the resource to the train that passes through the resource at the earliest;
   principle P22: otherwise, if the resource is a switch related resource and other related resources of the switch have been allocated, it is reasonable to allocate the resource to the train that has obtained the switch related resources;
   principle P23: otherwise, if the resource has already been applied by a train, it is reasonable to allocate the resource to the train that requests the resource at the earliest; and
   principle P24: otherwise, the reasonability of the resource allocation is determined according to a default order.

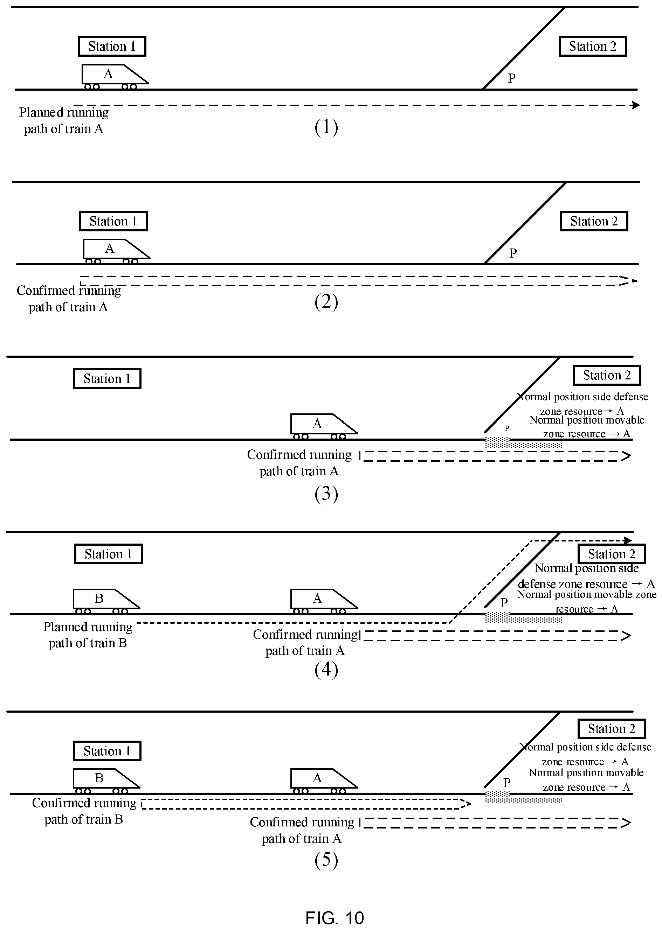

As shown in FIG. 10, the anti-deadlock method for a TACS system is as follows:
(101) when a train A stops correctly at an up platform of a station 1, calculating, by an ATS, a train operation task of arriving at an up platform of a station 2 for the train A; and issuing, by the ATS, it to a CC CC_A of the train A;
(102) receiving, by the CC_A, the train operation task issued by the ATS; calculating, by the CC_A, a planned operation curve and a planned running path; and sending, by the CC_A, the planned running path to a WRC for confirmation, as shown in (1) of FIG. 10;
(103) receiving, by the WRC, the planned running path from the CC_A and judging, by the WRC, that the planned running path of the current train A does not intersect with confirmed running paths of other trains; and calculating, by the WRC, that the confirmed running path of the train A as being equal to the planned running path, as shown in (2) of FIG. 10;
(104) calculating, by the CC_A, a resource application range of the train in an operation process according to a current operation state of the train, the planned operation curve and line conditions;
(105) sending, by the CC_A, an application request for a related resource within the resource application range to the WRC; and sending, by the CC_A, a release request for a related resource outside the resource application range to the WRC;
(106) calculating and responding to, by the WRC, the resource application request and the release request sent by the CC_A according to the confirmed running path of the CC_A, and controlling a state of a wayside device to be consistent with a state of the resource application, as shown in (3) of FIG. 10;
(107) when a train B stops correctly at the up platform of the station 1, calculating, by an ATS, a train operation task of arriving at the up platform of the station 2 for the train B; and issuing, by the ATS, it to a CC CC_B of the train B;
(108) receiving, by the CC_B, the train operation task issued by the ATS; calculating, by the CC_B, a planned operation curve and a planned running path; and sending, by the CC_B, the planned running path to the WRC for confirmation, as shown in (4) of FIG. 10; and
(109) after receiving the planned running path of the CC_B, judging, by the WRC, that the planned running path of the train B intersects with the confirmed running path of the train A and the trains runs in the same direction in the intersection area, judging, according to the principle P21, that it is reasonable to allocate movable area resources of a switch P and the side defense zone resources of the switch to the train A in the intersection area, and it is unreasonable to allocate the resources to the train B; the WRC calculates the starting end of the confirmed running path of the train B as being equal to the starting end of the planned path of the train, and the WRC calculates the terminal end of the confirmed running path of the train as being at the switch **P, as** shown in (5) of FIG. 10;
(110) calculating, by the CC_B, a resource application range of the train in an operation process according to the current operation state of the train, the planned operation curve and line conditions;
(111) sending, by the CC_B, an application request for related resources within the resource application range to the WRC, and sending, by the CC_B, a release request for related resources outside the resource application range to the WRC; and
(112) calculating and responding to, by the WRC, the resource application request and the release request sent by the CC_B according to the confirmed running path of the CC_B, and controlling the state of the wayside device to be consistent with a state of the resource application.

The above is an introduction of method embodiments, and the solutions of the present invention are further explained by apparatus embodiments.

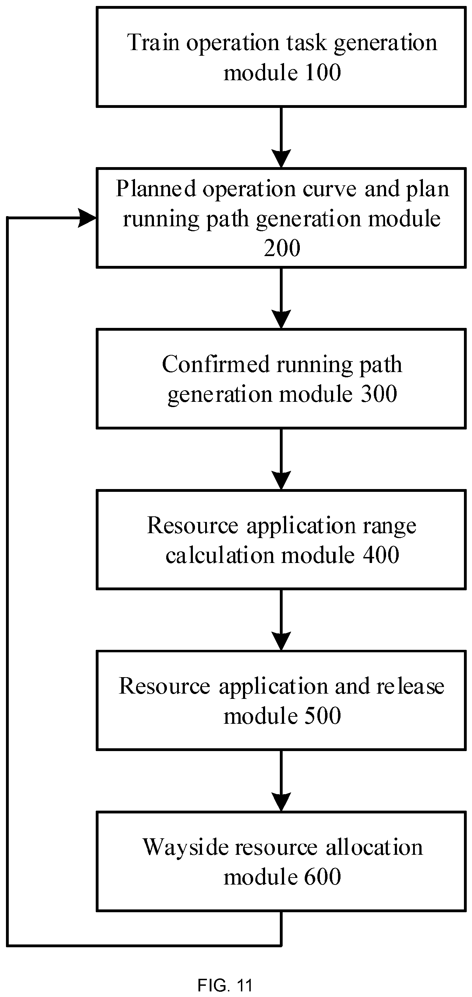

As shown in FIG. 11, an anti-deadlock apparatus for a TACS system, wherein the apparatus comprises:
a train operation task generation module 100 configured to generate, by an ATS, a train operation task according to a train scheduling plan, and issue the train operation task to a CC;
a planned operation curve and plan running path generation module 200 configured to generate, by the CC, a planned operation curve and a planned running path according to the train operation task issued by the ATS, and send the planned running path to a WRC for confirmation;
a confirmed running path generation module 300 configured to compare, by the WRC, the planned running path of the train with confirmed running paths of other trains, generate a confirmed running path of the train after arbitration, and update the confirmed running paths of the other trains;
a resource application range calculation module 400 configured to calculate, by the CC, a resource application range of the train in an operation process according to a current operation state of the train, the planned operation curve and line conditions;
a resource application and release module 500 configured to send, by the CC, an application request for related resources within the resource application range to the WRC, and at the same time, send, by the CC, a release request for related resources outside the resource application range to the WRC; and
a wayside resource allocation module 600 configured to calculate and respond to, by the WRC, the resource application request and the resource release request sent by each CC according to the confirmed running path of each train, and control a state of a wayside device to be consistent with a state of the resource application.

A person skilled in the art can clearly understand that for the convenience and simplicity of description, the specific working process of each described module can refer to the corresponding process in the above-mentioned method embodiments, and it is not be repeated herein.

The electronic device of the present invention comprises a central processing unit (CPU) that can perform various appropriate actions and processes according to computer program instructions stored in a read-only memory (ROM) or loaded from a storage unit into a random access memory (RAM). In the RAM, various programs and data required for operations of the device can also be stored. The CPU, ROM, and RAM are connected to each other via a bus. An input/output (I/O) interface is also connected to the bus.

A plurality of components in the device are connected to the I/O interface, wherein the plurality of components comprise: an input unit, such as a keyboard, a mouse; an output unit, such as various types of displays, a speaker; a storage unit, such as a disk, an optical disc; and a communication unit, such as a network card, a modem, a wireless communication transceiver. The communication unit allows the device to exchange information/data with other devices through a computer network such as the Internet and/or various telecommunications networks.

The processing unit performs each step of the method and each process described above, such as the method consisted of steps S1 to S6. For example, in some embodiments, the method consisted of steps S1 to S6 may be realized as a computer software program that is physically contained in a machine readable medium, such as the storage unit. In some embodiments, parts or all of the computer program may be loaded and/or installed on the device via the ROM and/or communication unit. When the computer program is loaded into the RAM and executed by the CPU, one or more steps of method consisted of steps S1 to S6 described above can be performed. Alternatively, in other embodiments, the CPU may be configured to execute the method consisted of steps S1 to S6 by any other appropriate means (e.g., by means of a firmware).

The functions described above herein can be performed, at least in part, by one or more hardware logical components. For example, without limitation, demonstration types of hardware logic components that can be used include: a Field Programmable Gate Array (FPGA), an Application-Specific Integrated Circuits (ASIC), an Application-Specific Standard Product (ASSP), a System-On-Chip (SOC), a Complex Programmable Logic Device (CPLD), etc.

Program codes for implementing the method of the present invention may be written in any combination of one or more programming languages. These program codes may be provided to a processor or controller of a general-purpose computer, a special-purpose computer or another programmable data processing apparatus so that the program codes, when being executed by the processor or controller, implements the functions or operations specified in the flow charts and/or block diagrams. The program codes can be executed entirely on a machine, partially on a machine, partially on a remote machine as a stand-alone software package, or completely on a remote machine or server.

In the context of the present invention, the machine readable medium may be a tangible medium that may contain or store a program for use by or in conjunction with an instruction executing system, apparatus or device. The machine readable medium may be a machine readable signal medium or a machine readable storage medium. The machine readable medium may include, but are not limited to, an electronic, magnetic, optical, electromagnetic, infrared, or semiconductor system, apparatus, or device, or any suitable combination of the above. More specific examples of the machine readable storage medium would include an electrical connection based on one or more wires, a portable computer disk, a hard disk, a Random Access Memory (RAM), a Read-Only Memory (ROM), an Erasable Programmable ROM (EPROM or flash memory), optical fibers, a convenient Compact Disk-ROM (CD-ROM), an optical storage device, a magnetic storage device, or any suitable combination of the above.

## Claims

1. An anti-deadlock method for a Train Autonomous Circumambulate System, TACS, comprising the following steps:
step S1: generating, by an automatic train supervision, ATS, a train operation task according to a train scheduling plan, and issuing the train operation task to a carborne controller, CC;
step S2: generating, by the CC, a planned operation curve and a planned running path according to the train operation task issued by the ATS, and sending the planned running path to a wayside resource controller, WRC, for confirmation;
step S3: comparing, by the WRC, the planned running path of the train with confirmed running paths of other trains, generating a confirmed running path of the train after arbitration, and updating the confirmed running paths of the other trains;
step S4: calculating, by the CC, a resource application range of the train in an operation process according to a current operation state of the train, the planned operation curve and line conditions;
step S5: sending, by the CC, an application request for related resources within the resource application range to the WRC, and at the same time, sending a release request for related resources outside the resource application range to the WRC; and
step S6: calculating and responding to, by the WRC, the resource application request and the resource release request sent by each CC according to the confirmed running path of each train, and controlling a state of a wayside device to be consistent with a state of the resource application,
wherein the step S3 of comparing, by the WRC, the planned running path of the train with confirmed running paths of other trains, comprises generating a confirmed running path of the train after arbitration, and updating the confirmed running paths of the other trains is specifically as follows:
step S31: judging whether the planned running path of the train intersects with the confirmed running path of any other train, and if not, calculating, by the WRC, the confirmed running path of the train as being equal to the planned running path of the train, and if so, performing step S32;
step S32: for each wayside resource in an intersection zone between the planned running path of the train and the confirmed running path of the other train, judging, by the WRC, reasonability of allocating the wayside resource to each train;
step S33: calculating, by the WRC, a starting end of the confirmed running path of the train as being a starting end of the planned running path of the train, and a terminal end of the confirmed running path of the train as being a first conflict point on the planned running path of the train, that is, a first position where a resource allocated to the train is not reasonable; and
step S34: if there is a conflict point in the confirmed running path of the other train in an arbitration process, updating, by the WRC, the confirmed running path of the other train and shortening the terminal end of the confirmed running path of the other train to be the conflict point,
wherein in the step S32, principles of judging the reasonability of allocating the wayside resource in the intersection zone between the planned running path of the train and the confirmed running path of the other train are as follows:
principle P1: if the planned running path of the train intersects with the confirmed running path of the other train and the trains in the intersection zone operate in opposite directions, it is unreasonable for the WRC to allocate the resource in the intersection zone to the train, but it is reasonable to allocate the resource to the other train; and
principle P2: if the planned running path of the train intersects with the confirmed running path of the other train and the trains in the intersection zone operate in the same direction, a condition for judging the reasonability of allocating, by the WRC, the resource in the intersection zone to the train and the other train follows preset sub-principles,
wherein the preset sub-principles specifically comprise:
principle P21: if the train and the other train pass through the resource in a unique order, it is reasonable to allocate the resource to the train that passes through the resource at the earliest;
principle P22: otherwise, if the resource is a switch related resource and other related resources of the switch have been allocated, it is reasonable to allocate the resource to the train that has obtained the switch related resources;
principle P23: otherwise, if the resource has already been applied by a train, it is reasonable to allocate the resource to the train that requests the resource at the earliest; and
principle P24: otherwise, the reasonability of the resource allocation is determined according to a default order.

2. The anti-deadlock method for a TACS system according to claim 1, wherein the TACS system comprises the ATS, the CC and the WRC, wherein the ATS is responsible for monitoring the operation state of the train and the state of the wayside device, and is responsible for generating the train operation task; the CC is responsible for planning the running path of the train, controlling automatic operation of the train, calculating resources required in the operation process of the train and completing the application and release of the resources; and the WRC is responsible for confirming the planned running path of the train, allocating and recovering wayside resources, controlling the wayside device and collecting the state of the wayside device.

3. The anti-deadlock method for a TACS system according to claim 2, wherein the wayside resources comprise normal switch position and reverse movable zone resources as well as normal switch position and reverse side defense zone resources; and the normal switch position and reverse movable zone resources and the normal switch position and reverse side defense zone resources are allocated according to a principle of mutual exclusion, and the principle of mutual exclusion means that resources of different positions of a switch are not capable of being allocated at the same time.

4. The anti-deadlock method for a TACS system according to claim 1, wherein the train operation task comprises information of an originating platform, a destination platform, departure time and arrival time, which is used to reflect operation requirements of the train in an inter-station interval; and
after the train stops correctly at a platform, the ATS generates and issues the train operation task for the train to arrive at a next platform according to an operation plan.

5. The anti-deadlock method for a TACS system according to claim 1, wherein the planned operation curve is a reference speed curve calculated by the CC according to the train operation task, the line conditions, train traction and braking characteristics, a speed limit condition and a driving mode.

6. The anti-deadlock method for a TACS system according to claim 1, wherein the planned running path is a running path calculated by the CC according to the train operation task, and contains the normal switch position or reverse movable zone resources and the normal switch position or reverse side defense zone resources required by the train to complete the task.

7. The anti-deadlock method for a TACS system according to claim 6, wherein the planned running path when the train performs a turn-back operation is required to consider the train operation task for two consecutive stations.

8. The anti-deadlock method for a TACS system according to claim 1, wherein the confirmed running path means the planned running path of the train wholly or partly confirmed by the WRC after conflicts between the planned running path of the train and the confirmed running paths of the other trains are arbitrated according to preset steps and principles to avoid operation deadlock of the trains caused by unreasonable resource allocation, such that the WRC ensures that all wayside resources on the confirmed running path of the train allocated to the train are reasonable.

9. An anti-deadlock apparatus for a Train Autonomous Circumambulate System, TACS, comprising:
a train operation task generation module (100) configured to generate, by an automatic train supervision, ATS, a train operation task according to a train scheduling plan, and issue the train operation task to a carborne controller, CC;
a planned operation curve and plan running path generation module (200) configured to generate, by the CC, a planned operation curve and a planned running path according to the train operation task issued by the ATS, and send the planned running path to a wayside resource controller, WRC, for confirmation;
a confirmed running path generation module (300) configured to compare, by the WRC, the planned running path of the train with confirmed running paths of other trains, generate a confirmed running path of the train after arbitration, and update the confirmed running paths of the other trains;
a resource application range calculation module (400) configured to calculate, by the CC, a resource application range of the train in an operation process according to a current operation state of the train, the planned operation curve and line conditions;
a resource application and release module (500) configured to send, by the CC, an application request for related resources within the resource application range to the WRC, and at the same time, send, by the CC, a release request for related resources outside the resource application range to the WRC; and
a wayside resource allocation module (600) configured to calculate and respond to, by the WRC, the resource application request and the resource release request sent by each CC according to the confirmed running path of each train, and control a state of a wayside device to be consistent with a state of the resource application,
wherein the WRC is further configured to generate a confirmed running path of the train after arbitration, and update the confirmed running paths of the other trains by judging (step S31) whether the planned running path of the train intersects with the confirmed running path of any other train, and if not, calculating, by the WRC, the confirmed running path of the train as being equal to the planned running path of the train, and if so, performing step S32;
step S32: for each wayside resource in an intersection zone between the planned running path of the train and the confirmed running path of the other train, judging, by the WRC, reasonability of allocating the wayside resource to each train;
step S33: calculating, by the WRC, a starting end of the confirmed running path of the train as being a starting end of the planned running path of the train, and a terminal end of the confirmed running path of the train as being a first conflict point on the planned running path of the train, that is, a first position where a resource allocated to the train is not reasonable; and
step S34: if there is a conflict point in the confirmed running path of the other train in an arbitration process, updating, by the WRC, the confirmed running path of the other train and shortening the terminal end of the confirmed running path of the other train to be the conflict point,
wherein in the step S32, principles of judging the reasonability of allocating the wayside resource in the intersection zone between the planned running path of the train and the confirmed running path of the other train are as follows:
principle P1: if the planned running path of the train intersects with the confirmed running path of the other train and the trains in the intersection zone operate in opposite directions, it is unreasonable for the WRC to allocate the resource in the intersection zone to the train, but it is reasonable to allocate the resource to the other train; and
principle P2: if the planned running path of the train intersects with the confirmed running path of the other train and the trains in the intersection zone operate in the same direction, a condition for judging the reasonability of allocating, by the WRC, the resource in the intersection zone to the train and the other train follows preset sub-principles,
wherein the preset sub-principles specifically comprise:
principle P21: if the train and the other train pass through the resource in a unique order, it is reasonable to allocate the resource to the train that passes through the resource at the earliest;
principle P22: otherwise, if the resource is a switch related resource and other related resources of the switch have been allocated, it is reasonable to allocate the resource to the train that has obtained the switch related resources;
principle P23: otherwise, if the resource has already been applied by a train, it is reasonable to allocate the resource to the train that requests the resource at the earliest; and
principle P24: otherwise, the reasonability of the resource allocation is determined according to a default order.

10. An electronic device, comprising a processor and a memory having stored thereon a computer program, which, when executing by the processor, implements the method according to any one of claims 1 to 8.

11. A computer readable storage medium having stored thereon a computer program, which, when executed by a processor, implements the method according to any one of claims 1 to 8.

## Patentansprüche

1. Anti-Deadlock-Verfahren für ein Train Autonomous Circumambulate System, TACS, umfassend die folgenden Schritte:
Schritt S1: Erzeugen durch eine automatische Zugüberwachung, ATS, einer Zugbetriebsaufgabe gemäß einem Zugfahrplan und Ausgeben der Zugbetriebsaufgabe an einen fahrzeugseitigen Controller, CC;
Schritt S2: Erzeugen durch den CC einer geplanten Betriebskurve und eines geplanten Fahrwegs entsprechend der vom ATS ausgegebenen Zugbetriebsaufgabe und Senden des geplanten Fahrwegs an einen streckenseitigen Ressourcencontroller, WRC, zur Bestätigung;
Schritt S3: Vergleichen durch den WRC des geplanten Fahrwegs des Zuges mit bestätigten Fahrwegen anderer Züge, Erzeugen eines bestätigten Fahrwegs des Zuges nach Arbitrierung und Aktualisieren der bestätigten Fahrwege der anderen Züge;
Schritt S4: Berechnen durch den CC eines Ressourcen-Anwendungsbereichs des Zuges im Betriebsablauf entsprechend dem aktuellen Betriebszustand des Zuges, der geplanten Betriebskurve und den Streckenbedingungen;
Schritt S5: Senden durch den CC einer Anforderungsanfrage für zugehörige Ressourcen innerhalb des Ressourcen-Anwendungsbereichs an den WRC und gleichzeitig Senden einer Freigabeanfrage für zugehörige Ressourcen außerhalb des Ressourcen-Anwendungsbereichs an den WRC; und
Schritt S6: Berechnen und Beantworten durch den WRC der von jedem CC gesendeten Ressourcen-Anforderungsanfrage und Ressourcen-Freigabeanfrage entsprechend dem bestätigten Fahrweg jedes Zuges sowie Steuern eines Zustands einer streckenseitigen Vorrichtung so, dass er mit dem Zustand der Ressourcenanwendung übereinstimmt,
wobei der Schritt S3 des Vergleichens durch den WRC des geplanten Fahrwegs des Zuges mit bestätigten Fahrwegen anderer Züge, umfassend das Erzeugen eines bestätigten Fahrwegs des Zuges nach Arbitrierung und das Aktualisieren der bestätigten Fahrwege der anderen Züge, insbesondere wie folgt ist:
Schritt S31: Beurteilen, ob der geplante Fahrweg des Zuges den bestätigten Fahrweg eines anderen Zuges schneidet; und falls nicht, Berechnen des bestätigten Fahrwegs des Zuges durch den WRC als gleich dem geplanten Fahrweg des Zuges; und falls doch, Ausführen von Schritt S32;
Schritt S32: Für jede streckenseitige Ressource in einer Schnittmenge zwischen dem geplanten Fahrweg des Zuges und dem bestätigten Fahrweg des anderen Zuges Beurteilen durch den WRC der Angemessenheit, die streckenseitige Ressource jeweils einem der Züge zuzuweisen;
Schritt S33: Berechnen durch den WRC eines Anfangsendes des bestätigten Fahrwegs des Zuges als Anfangsende des geplanten Fahrwegs des Zuges sowie eines Endendes des bestätigten Fahrwegs des Zuges als ersten Konfliktpunkt auf dem geplanten Fahrweg des Zuges, das heißt die erste Position, an der eine dem Zug zugewiesene Ressource nicht angemessen ist; und
Schritt S34: Falls im bestätigten Fahrweg des anderen Zuges während der Arbitrierung ein Konfliktpunkt besteht, Aktualisieren des bestätigten Fahrwegs des anderen Zuges durch den WRC und Verkürzen des Endendes des bestätigten Fahrwegs des anderen Zuges auf den Konfliktpunkt,
wobei in Schritt S32 die Grundsätze zur Beurteilung der Angemessenheit der Zuweisung der streckenseitigen Ressource in der Schnittmenge zwischen dem geplanten Fahrweg des Zuges und dem bestätigten Fahrweg des anderen Zuges wie folgt lauten:
Prinzip P1: Schneidet der geplante Fahrweg des Zuges den bestätigten Fahrweg des anderen Zuges und verkehren die Züge in der Schnittmenge in entgegengesetzte Richtungen, ist es für den WRC unangemessen, die Ressource in der Schnittmenge dem Zug zuzuweisen, hingegen angemessen, die Ressource dem anderen Zug zuzuweisen; und
Prinzip P2: Schneidet der geplante Fahrweg des Zuges den bestätigten Fahrweg des anderen Zuges und verkehren die Züge in der Schnittmenge in gleicher Richtung, so richtet sich die Bedingung zur Beurteilung der Angemessenheit der Zuweisung der Ressource in der Schnittmenge durch den WRC an den Zug und den anderen Zug nach voreingestellten Unterprinzipien,
wobei die voreingestellten Unterprinzipien insbesondere Folgendes umfassen:
Prinzip P21: Wenn der Zug und der andere Zug die Ressource in einer eindeutigen Reihenfolge passieren, ist es angemessen, die Ressource dem Zug zuzuweisen, der die Ressource als erster passiert;
Prinzip P22: Andernfalls, wenn es sich bei der Ressource um eine weichenbezogene Ressource handelt und andere zugehörige Ressourcen der Weiche bereits zugewiesen wurden, ist es angemessen, die Ressource dem Zug zuzuweisen, der die weichenbezogenen Ressourcen erhalten hat;
Prinzip P23: Andernfalls, wenn die Ressource bereits von einem Zug beantragt wurde, ist es angemessen, die Ressource dem Zug zuzuweisen, der die Ressource am frühesten angefordert hat; und
Prinzip P24: Andernfalls wird die Angemessenheit der Ressourcenvergabe gemäß einer Standardreihenfolge bestimmt.

2. Anti-Deadlock-Verfahren für ein TACS-System nach Anspruch 1, wobei das TACS-System die ATS, den CC und den WRC umfasst, wobei die ATS für die Überwachung des Betriebszustands des Zuges und des Zustands der streckenseitigen Vorrichtung verantwortlich ist und für das Erzeugen der Zugbetriebsaufgabe verantwortlich ist; der CC für die Planung des Fahrwegs des Zuges, die Steuerung des automatischen Betriebs des Zuges, das Berechnen der im Betriebsablauf des Zuges benötigten Ressourcen sowie das Durchführen der Beantragung und Freigabe der Ressourcen verantwortlich ist; und der WRC für das Bestätigen des geplanten Fahrwegs des Zuges, das Zuweisen und Rückgewinnen streckenseitiger Ressourcen, das Steuern der streckenseitigen Vorrichtung und das Erfassen des Zustands der streckenseitigen Vorrichtung verantwortlich ist.

3. Anti-Deadlock-Verfahren für ein TACS-System nach Anspruch 2, wobei die streckenseitigen Ressourcen Ressourcen der beweglichen Zone bei Weichenstellung Normal und Gegen sowie Ressourcen der Seiten-Schutzzone bei Weichenstellung Normal und Gegen umfassen; und wobei die Ressourcen der beweglichen Zone bei Weichenstellung Normal/Gegen und die Ressourcen der Seiten-Schutzzone bei Weichenstellung Normal/Gegen nach dem Prinzip der gegenseitigen Ausschließlichkeit zugewiesen werden, wobei das Prinzip der gegenseitigen Ausschließlichkeit bedeutet, dass Ressourcen unterschiedlicher Stellungen einer Weiche nicht gleichzeitig zugewiesen werden können.

4. Anti-Deadlock-Verfahren für ein TACS-System nach Anspruch 1, wobei die Zugbetriebsaufgabe Informationen eines Ausgangsbahnsteigs, eines Zielbahnsteigs, der Abfahrtszeit und der Ankunftszeit umfasst, die dazu dienen, die Betriebsanforderungen des Zuges im Zwischenraum zwischen Stationen widerzuspiegeln; und
wobei nach dem korrekten Halt des Zuges an einem Bahnsteig die ATS die Zugbetriebsaufgabe erzeugt und ausgibt, damit der Zug gemäß einem Betriebsplan den nächsten Bahnsteig erreicht.

5. Anti-Deadlock-Verfahren für ein TACS-System nach Anspruch 1, wobei die geplante Betriebskurve eine Referenzgeschwindigkeitskurve ist, die vom CC gemäß der Zugbetriebsaufgabe, den Streckenbedingungen, den Traktions- und Bremscharakteristiken des Zuges, einer Geschwindigkeitsbegrenzung und einem Fahrmodus berechnet wird.

6. Anti-Deadlock-Verfahren für ein TACS-System nach Anspruch 1, wobei der geplante Fahrweg ein vom CC gemäß der Zugbetriebsaufgabe berechneter Fahrweg ist und die Ressourcen der beweglichen Zone bei Weichenstellung Normal oder Gegen sowie die Ressourcen der Seiten-Schutzzone bei Weichenstellung Normal oder Gegen enthält, die der Zug zur Aufgabenerfüllung benötigt.

7. Anti-Deadlock-Verfahren für ein TACS-System nach Anspruch 6, wobei der geplante Fahrweg bei Durchführung eines Wendebetriebs durch den Zug die Zugbetriebsaufgabe für zwei aufeinanderfolgende Stationen berücksichtigen muss.

8. Anti-Deadlock-Verfahren für ein TACS-System nach Anspruch 1, wobei der bestätigte Fahrweg den geplanten Fahrweg des Zuges bezeichnet, der ganz oder teilweise vom WRC bestätigt wurde, nachdem Konflikte zwischen dem geplanten Fahrweg des Zuges und den bestätigten Fahrwegen der anderen Züge gemäß voreingestellten Schritten und Grundsätzen arbitriert wurden, um einen Betriebs-Deadlock der Züge infolge unangemessener Ressourcenvergabe zu vermeiden, so dass der WRC sicherstellt, dass alle streckenseitigen Ressourcen auf dem bestätigten Fahrweg des Zuges, die dem Zug zugewiesen sind, angemessen sind.

9. Anti-Deadlock-Vorrichtung für ein Train Autonomous Circumambulate System, TACS, umfassend:
ein Modul (100) zur Erzeugung von Zugbetriebsaufgaben, ausgebildet, durch eine ATS eine Zugbetriebsaufgabe gemäß einem Zugfahrplan zu erzeugen und die Zugbetriebsaufgabe an einen CC auszugeben;
ein Modul (200) zur Erzeugung einer geplanten Betriebskurve und eines geplanten Fahrwegs, ausgebildet, durch den CC eine geplante Betriebskurve und einen geplanten Fahrweg entsprechend der vom ATS ausgegebenen Zugbetriebsaufgabe zu erzeugen und den geplanten Fahrweg an einen WRC zur Bestätigung zu senden;
ein Modul (300) zur Erzeugung eines bestätigten Fahrwegs, ausgebildet, durch den WRC den geplanten Fahrweg des Zuges mit bestätigten Fahrwegen anderer Züge zu vergleichen, nach Arbitrierung einen bestätigten Fahrweg des Zuges zu erzeugen und die bestätigten Fahrwege der anderen Züge zu aktualisieren;
ein Modul (400) zur Berechnung eines Ressourcen-Anwendungsbereichs, ausgebildet, durch den CC einen Ressourcen-Anwendungsbereich des Zuges im Betriebsablauf entsprechend dem aktuellen Betriebszustand des Zuges, der geplanten Betriebskurve und den Streckenbedingungen zu berechnen;
ein Modul (500) zur Ressourcenbeantragung und -freigabe, ausgebildet, durch den CC eine Anforderungsanfrage für zugehörige Ressourcen innerhalb des Ressourcen-Anwendungsbereichs an den WRC zu senden und gleichzeitig eine Freigabeanfrage für zugehörige Ressourcen außerhalb des Ressourcen-Anwendungsbereichs an den WRC zu senden; und
ein Modul (600) zur Zuteilung streckenseitiger Ressourcen, ausgebildet, durch den WRC die von jedem CC gesendete Ressourcen-Anforderungsanfrage und Ressourcen-Freigabeanfrage entsprechend dem bestätigten Fahrweg jedes Zuges zu berechnen und zu beantworten und den Zustand einer streckenseitigen Vorrichtung so zu steuern, dass er mit dem Zustand der Ressourcenanwendung übereinstimmt,
wobei der WRC ferner dazu ausgebildet ist, einen bestätigten Fahrweg des Zuges nach Arbitrierung zu erzeugen und die bestätigten Fahrwege der anderen Züge zu aktualisieren, indem
beurteilt wird (Schritt S31), ob der geplante Fahrweg des Zuges den bestätigten Fahrweg eines anderen Zuges schneidet; und falls nicht, der bestätigte Fahrweg des Zuges durch den WRC als gleich dem geplanten Fahrweg des Zuges berechnet wird; und falls doch, Schritt S32 ausgeführt wird;
Schritt S32: für jede streckenseitige Ressource in einer Schnittmenge zwischen dem geplanten Fahrweg des Zuges und dem bestätigten Fahrweg des anderen Zuges die Angemessenheit der Zuweisung der streckenseitigen Ressource an jeden Zug durch den WRC beurteilt wird;
Schritt S33: ein Anfangsende des bestätigten Fahrwegs des Zuges durch den WRC als Anfangsende des geplanten Fahrwegs des Zuges und ein Endende des bestätigten Fahrwegs des Zuges als erster Konfliktpunkt auf dem geplanten Fahrweg des Zuges berechnet wird, das heißt die erste Position, an der eine dem Zug zugewiesene Ressource nicht angemessen ist; und
Schritt S34: sofern im bestätigten Fahrweg des anderen Zuges in einem Arbitrierungsprozess ein Konfliktpunkt vorliegt, der bestätigte Fahrweg des anderen Zuges durch den WRC aktualisiert und das Endende des bestätigten Fahrwegs des anderen Zuges auf den Konfliktpunkt verkürzt wird,
wobei in Schritt S32 die Grundsätze zur Beurteilung der Angemessenheit der Zuweisung der streckenseitigen Ressource in der Schnittmenge zwischen dem geplanten Fahrweg des Zuges und dem bestätigten Fahrweg des anderen Zuges wie folgt sind:
Prinzip P1: Schneidet der geplante Fahrweg des Zuges den bestätigten Fahrweg des anderen Zuges und verkehren die Züge in der Schnittmenge in entgegengesetzte Richtungen, ist es unangemessen, die Ressource in der Schnittmenge dem Zug zuzuweisen, jedoch angemessen, die Ressource dem anderen Zug zuzuweisen; und
Prinzip P2: Schneidet der geplante Fahrweg des Zuges den bestätigten Fahrweg des anderen Zuges und verkehren die Züge in der Schnittmenge in gleicher Richtung, so richtet sich die Bedingung zur Beurteilung der Angemessenheit der Zuweisung der Ressource in der Schnittmenge an den Zug und den anderen Zug durch den WRC nach voreingestellten Unterprinzipien,
wobei die voreingestellten Unterprinzipien insbesondere Folgendes umfassen:
Prinzip P21: Wenn der Zug und der andere Zug die Ressource in einer eindeutigen Reihenfolge passieren, ist es angemessen, die Ressource dem Zug zuzuweisen, der die Ressource am frühesten passiert;
Prinzip P22: Andernfalls, wenn es sich bei der Ressource um eine weichenbezogene Ressource handelt und andere zugehörige Ressourcen der Weiche bereits zugewiesen sind, ist es angemessen, die Ressource dem Zug zuzuweisen, der die weichenbezogenen Ressourcen erhalten hat;
Prinzip P23: Andernfalls, wenn die Ressource bereits von einem Zug beantragt wurde, ist es angemessen, die Ressource dem Zug zuzuweisen, der die Ressource am frühesten angefordert hat; und
Prinzip P24: Andernfalls wird die Angemessenheit der Ressourcenvergabe gemäß einer Standardreihenfolge bestimmt.

10. Elektronisches Gerät, umfassend einen Prozessor und einen Speicher, auf dem ein Computerprogramm gespeichert ist, das, wenn es vom Prozessor ausgeführt wird, das Verfahren nach einem der Ansprüche 1 bis 8 implementiert.

11. Computerspeicherlesbares Speichermedium, auf dem ein Computerprogramm gespeichert ist, das, wenn es von einem Prozessor ausgeführt wird, das Verfahren nach einem der Ansprüche 1 bis 8 implementiert.

## Revendications

1. Procédé anti-interblocage pour un Train Autonomous Circumambulate System, TACS, comprenant les étapes suivantes :
étape S1 : génération, par une supervision automatique des trains, ATS, d'une tâche d'exploitation du train selon un plan d'ordonnancement des trains et émission de la tâche d'exploitation du train à un contrôleur embarqué, CC ;
étape S2 : génération, par le CC, d'une courbe d'exploitation planifiée et d'un trajet planifié selon la tâche d'exploitation émise par l'ATS, et envoi du trajet planifié à un contrôleur des ressources côté voie, WRC, pour confirmation ;
étape S3 : comparaison, par le WRC, du trajet planifié du train avec les trajets confirmés des autres trains, génération d'un trajet confirmé du train après arbitrage et mise à jour des trajets confirmés des autres trains ;
étape S4 : calcul, par le CC, d'une plage de demande de ressources du train au cours de l'exploitation selon l'état d'exploitation courant du train, la courbe d'exploitation planifiée et les conditions de ligne ;
étape S5 : envoi, par le CC, d'une demande d'attribution des ressources concernées situées dans la plage de demande de ressources au WRC et, simultanément, envoi d'une demande de libération des ressources concernées situées hors de la plage de demande de ressources au WRC ; et
étape S6 : calcul et réponse, par le WRC, aux demandes d'attribution de ressources et aux demandes de libération de ressources envoyées par chaque CC selon le trajet confirmé de chaque train, et commande de l'état d'un dispositif côté voie pour le rendre conforme à l'état d'application des ressources,
dans laquelle l'étape S3 de comparaison, par le WRC, du trajet planifié du train avec les trajets confirmés des autres trains, comprenant la génération d'un trajet confirmé du train après arbitrage et la mise à jour des trajets confirmés des autres trains, est spécifiquement la suivante :
étape S31 : déterminer si le trajet planifié du train coupe le trajet confirmé d'un autre train et, dans la négative, calculer, par le WRC, le trajet confirmé du train comme étant égal au trajet planifié du train, et, dans l'affirmative, exécuter l'étape S32 ;
étape S32 : pour chaque ressource côté voie située dans une zone d'intersection entre le trajet planifié du train et le trajet confirmé de l'autre train, déterminer, par le WRC, le caractère raisonnable de l'attribution de la ressource côté voie à chacun des trains ;
étape S33 : calculer, par le WRC, une extrémité de départ du trajet confirmé du train comme étant l'extrémité de départ du trajet planifié du train, et une extrémité terminale du trajet confirmé du train comme étant un premier point de conflit sur le trajet planifié du train, c'est-à-dire une première position où une ressource attribuée au train n'est pas raisonnable ; et
étape S34 : s'il existe un point de conflit sur le trajet confirmé de l'autre train lors de l'arbitrage, mettre à jour, par le WRC, le trajet confirmé de l'autre train et raccourcir l'extrémité terminale du trajet confirmé de l'autre train jusqu'au point de conflit,
dans laquelle, à l'étape S32, les principes de détermination du caractère raisonnable de l'attribution de la ressource côté voie dans la zone d'intersection entre le trajet planifié du train et le trajet confirmé de l'autre train sont les suivants :
principe P1 : si le trajet planifié du train coupe le trajet confirmé de l'autre train et que les trains circulent en sens opposés dans la zone d'intersection, il n'est pas raisonnable pour le WRC d'attribuer la ressource de la zone d'intersection au train, mais il est raisonnable d'attribuer la ressource à l'autre train ; et
principe P2 : si le trajet planifié du train coupe le trajet confirmé de l'autre train et que les trains circulent dans le même sens dans la zone d'intersection, une condition de détermination du caractère raisonnable de l'attribution, par le WRC, de la ressource de la zone d'intersection au train et à l'autre train suit des sous-principes prédéfinis,
lesquels comprennent spécifiquement :
principe P21 : si le train et l'autre train traversent la ressource dans un ordre unique, il est raisonnable d'attribuer la ressource au train qui traverse la ressource le plus tôt ;
principe P22 : à défaut, si la ressource est une ressource liée à une aiguille et que d'autres ressources liées à l'aiguille ont été attribuées, il est raisonnable d'attribuer la ressource au train qui a obtenu les ressources liées à l'aiguille ;
principe P23 : à défaut, si la ressource a déjà été demandée par un train, il est raisonnable d'attribuer la ressource au train qui a demandé la ressource le plus tôt ; et
principe P24 : à défaut, le caractère raisonnable de l'attribution des ressources est déterminé selon un ordre par défaut.

2. Procédé anti-interblocage pour un système TACS selon la revendication 1, le système TACS comprenant l'ATS, le CC et le WRC, l'ATS étant chargée de surveiller l'état d'exploitation du train et l'état du dispositif côté voie et de générer la tâche d'exploitation du train ; le CC étant chargé de planifier le trajet du train, de commander l'exploitation automatique du train, de calculer les ressources nécessaires au cours de l'exploitation du train et d'effectuer la demande et la libération des ressources ; et le WRC étant chargé de confirmer le trajet planifié du train, d'attribuer et de récupérer les ressources côté voie, de commander le dispositif côté voie et de collecter l'état du dispositif côté voie.

3. Procédé anti-interblocage pour un système TACS selon la revendication 2, les ressources côté voie comprenant des ressources de zone mobile en position normale d'aiguillage et en position renversée, ainsi que des ressources de zone de protection latérale en position normale d'aiguillage et en position renversée ; et les ressources de zone mobile en position normale/renversée et les ressources de zone de protection latérale en position normale/renversée étant attribuées selon un principe d'exclusion mutuelle, le principe d'exclusion mutuelle signifiant que des ressources correspondant à des positions différentes d'une aiguille ne peuvent pas être attribuées simultanément.

4. Procédé anti-interblocage pour un système TACS selon la revendication 1, la tâche d'exploitation du train comprenant des informations relatives à un quai d'origine, un quai de destination, une heure de départ et une heure d'arrivée, destinées à refléter les exigences d'exploitation du train dans un intervalle interstations ; et
après l'arrêt correct du train à un quai, l'ATS générant et émettant la tâche d'exploitation du train pour que le train atteigne un quai suivant selon un plan d'exploitation.

5. Procédé anti-interblocage pour un système TACS selon la revendication 1, la courbe d'exploitation planifiée étant une courbe de vitesse de référence calculée par le CC selon la tâche d'exploitation du train, les conditions de ligne, les caractéristiques de traction et de freinage du train, une condition de limitation de vitesse et un mode de conduite.

6. Procédé anti-interblocage pour un système TACS selon la revendication 1, le trajet planifié étant un trajet calculé par le CC selon la tâche d'exploitation du train et contenant les ressources de zone mobile en position normale ou renversée d'aiguillage et les ressources de zone de protection latérale en position normale ou renversée d'aiguillage requises par le train pour accomplir la tâche.

7. Procédé anti-interblocage pour un système TACS selon la revendication 6, le trajet planifié lorsque le train effectue une manœuvre de rebroussement devant prendre en compte la tâche d'exploitation du train pour deux stations consécutives.

8. Procédé anti-interblocage pour un système TACS selon la revendication 1, le trajet confirmé désignant le trajet planifié du train confirmé en tout ou partie par le WRC après arbitrage des conflits entre le trajet planifié du train et les trajets confirmés des autres trains selon des étapes et des principes prédéfinis afin d'éviter un interblocage d'exploitation des trains causé par une attribution de ressources non raisonnable, de sorte que le WRC s'assure que toutes les ressources côté voie sur le trajet confirmé du train attribuées au train sont raisonnables.

9. Dispositif anti-interblocage pour un Train Autonomous Circumambulate System, TACS, comprenant :
un module (100) de génération de tâche d'exploitation du train, configuré pour générer, par une ATS, une tâche d'exploitation du train selon un plan d'ordonnancement des trains et émettre la tâche d'exploitation du train à un CC ;
un module (200) de génération d'une courbe d'exploitation planifiée et d'un trajet planifié, configuré pour générer, par le CC, une courbe d'exploitation planifiée et un trajet planifié selon la tâche d'exploitation émise par l'ATS, et envoyer le trajet planifié à un WRC pour confirmation ;
un module (300) de génération de trajet confirmé, configuré pour comparer, par le WRC, le trajet planifié du train avec les trajets confirmés des autres trains, générer un trajet confirmé du train après arbitrage et mettre à jour les trajets confirmés des autres trains;
un module (400) de calcul de la plage de demande de ressources, configuré pour calculer, par le CC, une plage de demande de ressources du train au cours de l'exploitation selon l'état d'exploitation courant du train, la courbe d'exploitation planifiée et les conditions de ligne ;
un module (500) de demande et de libération de ressources, configuré pour envoyer, par le CC, une demande d'attribution des ressources concernées situées dans la plage de demande de ressources au WRC et, en même temps, envoyer, par le CC, une demande de libération des ressources concernées situées hors de la plage de demande de ressources au WRC ; et
un module (600) d'attribution des ressources côté voie, configuré pour calculer et répondre, par le WRC, aux demandes d'attribution et de libération de ressources envoyées par chaque CC selon le trajet confirmé de chaque train, et commander l'état d'un dispositif côté voie pour le rendre conforme à l'état d'application des ressources,
le WRC étant en outre configuré pour générer un trajet confirmé du train après arbitrage et mettre à jour les trajets confirmés des autres trains en :
déterminant (étape S31) si le trajet planifié du train coupe le trajet confirmé d'un autre train et, dans la négative, calculant, par le WRC, le trajet confirmé du train comme étant égal au trajet planifié du train et, dans l'affirmative, exécutant l'étape S32 ;
étape S32 : pour chaque ressource côté voie située dans une zone d'intersection entre le trajet planifié du train et le trajet confirmé de l'autre train, déterminant, par le WRC, le caractère raisonnable de l'attribution de la ressource côté voie à chacun des trains ;
étape S33 : calculant, par le WRC, une extrémité de départ du trajet confirmé du train comme étant l'extrémité de départ du trajet planifié du train, et une extrémité terminale du trajet confirmé du train comme étant un premier point de conflit sur le trajet planifié du train, c'est-à-dire une première position où une ressource attribuée au train n'est pas raisonnable ; et
étape S34 : s'il existe un point de conflit sur le trajet confirmé de l'autre train au cours de l'arbitrage, mettant à jour, par le WRC, le trajet confirmé de l'autre train et raccourcissant l'extrémité terminale du trajet confirmé de l'autre train jusqu'au point de conflit,
dans laquelle, à l'étape S32, les principes de détermination du caractère raisonnable de l'attribution de la ressource côté voie dans la zone d'intersection entre le trajet planifié du train et le trajet confirmé de l'autre train sont les suivants :
principe P1 : si le trajet planifié du train coupe le trajet confirmé de l'autre train et que les trains circulent en sens opposés dans la zone d'intersection, il n'est pas raisonnable d'attribuer au train la ressource de la zone d'intersection, mais il est raisonnable d'attribuer la ressource à l'autre train ; et
principe P2 : si le trajet planifié du train coupe le trajet confirmé de l'autre train et que les trains circulent dans le même sens dans la zone d'intersection, une condition de détermination du caractère raisonnable de l'attribution, par le WRC, de la ressource de la zone d'intersection au train et à l'autre train suit des sous-principes prédéfinis,
lesquels comprennent spécifiquement :
principe P21 : si le train et l'autre train traversent la ressource selon un ordre unique, il est raisonnable d'attribuer la ressource au train qui traverse la ressource le plus tôt ;
principe P22 : à défaut, si la ressource est une ressource liée à une aiguille et que d'autres ressources liées à l'aiguille ont été attribuées, il est raisonnable d'attribuer la ressource au train qui a obtenu les ressources liées à l'aiguille ;
principe P23 : à défaut, si la ressource a déjà été demandée par un train, il est raisonnable d'attribuer la ressource au train qui a demandé la ressource le plus tôt ; et
principe P24 : à défaut, le caractère raisonnable de l'attribution des ressources est déterminé selon un ordre par défaut.

10. Dispositif électronique, comprenant un processeur et une mémoire sur laquelle est stocké un programme informatique qui, lors de son exécution par le processeur, met en œuvre le procédé selon l'une quelconque des revendications 1 à 8.

11. Support d'enregistrement lisible par ordinateur, sur lequel est stocké un programme informatique qui, lorsqu'il est exécuté par un processeur, met en œuvre le procédé selon l'une quelconque des revendications 1 à 8.
